# EUROPÄISCHE PATENTSCHRIFT

(11) **EP 2 934 866 B1**
(45) Veröffentlichungstag und Bekanntmachung des Hinweises auf die Patenterteilung: **14.10.2020**
(21) Anmeldenummer: 13817932.0
(22) Anmeldetag: 20.12.2013
(51) Int. Cl.: B29C 70/56, B29C 70/34, B29C 70/86, B29C 51/26, B29C 51/00, B29C 51/42, B29C 51/14, B29C 51/12, B29L 9/00

(54) **VERFAHREN FÜR DIE HERSTELLUNG KOMPLEXER GEOMETRISCHER STRUKTUREN AUS MEHREREN FORMTEILEN**
METHOD FOR PRODUCING COMPLEX GEOMETRIC STRUCTURES FROM A PLURALITY OF MOULDED PARTS
PROCÉDÉ POUR FABRIQUER DES STRUCTURES GÉOMÉTRIQUES COMPLEXES À PARTIR DE PLUSIEURS PIÈCES MOULÉES

(30) Priorität: 21.12.2012 US 201261740491 P; 21.12.2012 US 201261740700 P
(43) Veröffentlichungstag der Anmeldung: 28.10.2015
(73) Patentinhaber: Dieffenbacher GmbH Maschinen- und Anlagenbau, 75031 Eppingen (DE)
(72) Erfinder: BILBY, Christopher, 75031 Eppingen (DE); CAMPBELL, Dwight Christopher, 75031 Eppingen (DE); DEQUINE, Dustin Louis, 75031 Eppingen (DE); LIZOTTE, Andrew, 75031 Eppingen (DE); CRAMER, David Russell, 75031 Eppingen (DE); HOWELL, D. Dewayne, 75031 Eppingen (DE)
(74) Vertreter: Lemcke, Brommer & Partner Patentanwälte Partnerschaft mbB
(86) Internationale Anmeldenummer: PCT/EP2013/077781
(87) Internationale Veröffentlichungsnummer: WO 2014/096403

(56) Entgegenhaltungen:
- WO-A2-2010/083840
- FR-A1- 2 840 246
- US-A- 5 462 786
- US-B1- 6 685 789

## Beschreibung

Die vorliegenden Ausführungsformen beziehen sich im Allgemeinen auf das Thermoformen und insbesondere auf das Thermoformen langfaserverstärkter Thermoplasten. Die Ausführungsformen beziehen sich auf Systeme und Verfahren zur Herstellung komplexer geometrischer Strukturen durch die Verbindung mehrerer Endformteile während des und vor dem Umformen.

### Hintergrundinformationen zur Erfindung

Thermoformen ist ein Herstellungsverfahren, bei dem Kunststoff geschmolzen und anschließend in einer Form konsolidiert wird. Es besitzt viele Vorteile gegenüber anderen Herstellungsverfahren, da es sowohl einfach und schnell ist als auch rasch umgesetzt werden kann. Obwohl Thermoformen viele Vorteile gegenüber anderen Formverfahren haben mag, weil man damit auf sehr effiziente Art und Weise rasch dünnwandige Teile herstellen kann und es sich somit durch eine relativ hohe Produktionsgeschwindigkeit und preisgünstigere Werkzeugkosten auszeichnet, kann dieses Verfahren bei bestimmten Teilen oder Teileanordnungen sehr komplex und schwierig werden, um unter Anwendung von Stanzform-Standardverfahren komplexe Teile in verschiedenen Formen und Größen herzustellen. Diese Teile bedürfen häufig einer Nachbearbeitung oder mehrerer Schritte, zum Beispiel Ko-Konsolidierung, isothermisches Umformen oder sekundäres Zusammenfügen.

Bei der Verwendung langfaserverstärkter Thermoplaste ("long fiber reinforced thermoplastics", LFRT) können die Herausforderungen bei der Herstellung sogar noch komplexer werden. In diesem Fall kann das Stanzformen komplexer Formen sogar noch weitere Probleme verursachen und es erforderlich machen, dass Abweichungen bei der Teiledicke vor dem Umformen beim Teil eingeführt werden. Zusätzlich kann die Anwendung von Spannsystemen auf das rohe Formteil zum Zeitpunkt des Umformens erforderlich sein, um komplexe Gebilde zu formen. Weitere Komplikationen entstehen auch, wenn ein Teil mit variabler Dicke gewünscht wird. Die Herstellung thermogeformter LFRT-Teile kann ihren Vorteil gegenüber anderen Verfahren und Methoden, zum Beispiel Spritzguss, verlieren, wenn diese Teile komplexer werden und mehrere Verfahrensschritte zur Teileherstellung erfordern.

Zu den derzeitigen Verfahren für die Herstellung thermogeformter LFRT-Teile gehören unter anderem Stanzformen, isothermisches Umformen, Ko-Konsolidierung, Konsolidierung und das traditionelle Autoklav-Verfahren.

Auf Grund der potentiellen Vorteile gegenüber Metall, wie geringere dichte, höhere spezifische Stärke, höhere spezifische Steifigkeit sowie Widerstandsfähigkeit gegenüber Ermüdung und Korrosionsbeständigkeit ist der Einsatz langfaserverstärkter Kunststoffe von großem Interesse insbesondere für die Luftfahrt-, Automobil- und Sportartikelindustrie. Für Teile jedoch, welche Merkmale aufweisen, die denen einer maschinellen Bearbeitung ähneln (Erhebungen oder Vertiefungen, lokalisierte Änderungen der Dicke, Radien an Kanten der Erhebungen oder Vertiefungen), wird auf Grund der Beschränkungen der bekannten Herstellungsverfahren oftmals Metall als Werkstoff gewählt. Für den Fall, dass wegen der vorteilhaften Eigenschaften der Einsatz langfaserverstärkter Kunststoffe unumgänglich ist für Teile mit maschineller Bearbeitung ähnelnden Merkmalen, führen die zur Verfügung stehenden Herstellungsverfahren in hohen Herstellungskosten oder erfordern es, Kompromisse einzugehen.

Aus der US 5,462,789 A ist eine dekorative Platte mit einer Montageplatte bekannt, welche ein thermoplastisches Material umfasst, und mit einer Einlage mit einer dekorativen Oberfläche und einem auf die dekorative Oberfläche laminierten thermoplastischen Träger. Zur Herstellung der dekorativen Platte wird zunächst die Einlage mit der dekorativen Oberfläche mit der thermoplastischen Beschichtung durch Erwärmen verbunden, anschließend in eine beliebige Oberfläche umgeformt und schließlich mit der Montageplatte zusammen verpresst.

Aus der FR 2 840 246 A1 ist ein Verfahren zum Formen und Verstärken eines Werkstücks aus thermoplastischem Material bekannt, wobei zunächst eine Lage an thermoplastischem Material erwärmt, in eine Form gelegt und anschließend einem Thermoformen unterzogen wird, und wobei eine weitere Lage an thermoplastischem Material erwärmt, in die Form eingelegt und anschließend mit einem Gegenwerkzeug in der Form geformt und mit der ersten Lage eines thermoplastischen Materials verbunden wird.

Aus der WO 2010/083840 A2 ist ein Verfahren zur Herstellung eines Windturbinenblattes bekannt, wobei in der Herstellung zumindest eine Schicht aus vorimprägnierten Fasern mit einem ungehärtetem duroplastischem Harz und zumindest eine Schicht aus gehärtetem, faserverstärktem Harz zumindest teilweise überlappend angeordnet werden, wobei nach dem Anordnen der Schichten der Schichtverbund gemeinsam erwärmt und ausgehärtet wird.

Es ist daher eine Aufgabe der Erfindung, ein Verfahren anzugeben, welches die vorstehenden Nachteile überwindet und es erlaubt, komplexe Teile aus Thermoplasten effizient herzustellen.

### ZUSAMMENFASSUNG

Die Ausführungsformen stellen Verfahren und Systeme für die Herstellung komplexer geometrischer Strukturen aus mehreren Endformteilen während des und vor dem Umformen bereit.

Die Ausführungsformen bieten Verfahren und Systeme für die Herstellung komplexer Teile aus mehreren Endformteilen während des oder vor dem Umformen. Die Ausführungsformen der Verfahren und Systeme können in mehreren Schritten geschaffen werden. Diese Schritte können in drei Gruppen unterteilt werden: (i) spezifisches Legen ("Lay-Up"); (ii) Maßschneidern oder Trimmen von nicht konsolidierten Teilen zu einer Endform; und (iii) Spannmaßnahmen. Die vorliegenden Ausführungsformen können zu einer Verringerung der Verarbeitungsschritte führen und ein Formen komplexer Gebilde relativ schnell ermöglichen.

Die Ausführungsformen können auch erlauben, faserverstärkte thermoplastische Verbundwerkstoffteile kostengünstig und ohne Kompromittieren der Leistungsfähigkeit herzustellen.

In einigen Ausführungsformen können getrimmte und konsolidierte Formteile mit nicht konsolidierten Formteilen ko-konsolidiert werden, um Teile herzustellen, die Merkmale aufweisen, welche einer Metallplatte ähneln, die beispielsweise mit einer 3-Achsen Werkzeugmaschine maschinell bearbeitet wurden.

Die Ausführungsformen lassen sich auf alle Formen thermoplastischer Matrixen anwenden, wie beispielsweise PEEK, PEI, PEKK, Nylon, PPS, und PP, und ist auch anwendbar auf alle Arten von Verstärkungsfasern, wie beispielsweise Kohlenstofffasern und Glasfasern. Aspekte der Ausführungsformen können sich auch anwenden lassen auf duroplastische Verbundwerkstoffe, wie Kohlenstofffaser- und Glasfaser-Epoxid, BMI, Polyimide, und so weiter.

Andere Systeme, Verfahren, Eigenschaften und Vorteile der Ausführungsformen sind für jeden Fachmann nach Überprüfung der folgenden Figuren und ausführlichen Beschreibung ersichtlich bzw. werden ersichtlich sein. Alle derartigen zusätzlichen Systeme, Verfahren, Eigenschaften und Vorteile sollen in dieser Beschreibung und Zusammenfassung enthalten sein, im Geltungsbereich der Ausführungsformen liegen und durch die Ansprüche geschützt sein.

### KURZE BESCHREIBUNG DER ZEICHNUNGEN

Die Ausführungsformen lassen sich mit Bezugnahme auf die folgenden Zeichnungen und die folgende Beschreibung besser verstehen. Die Bauelemente in den Figuren sind nicht unbedingt maßstabsgetreu, wobei der Schwerpunkt darauf liegt, die Grundsätze der Erfindung zu veranschaulichen. Außerdem bezeichnen gleichartige Bezugszeichen in den Figuren die entsprechenden Teile in den verschiedenen Ansichten. Es zeigen:
- Fig. 1: ist ein Ablaufplan für die Auslegung und Herstellung des Teils gemäß einer Ausführungsform;
- Fig. 2: ist eine schematische Darstellung der Vorder- und Draufsicht eines geformten tiefgezogenen komplexen Teils gemäß einer Ausführungsform;
- Fig. 3: ist eine schematische Darstellung eines Beispiels eines mehrfachdicken rohen Formteils, das Stufungsprofile ("ply-drop profiles") aufweist, gemäß einer Ausführungsform;
- Fig. 4: ist eine schematische Darstellung eines flachen, kompakten rohen Formteils vor dem Stanz-Thermoformen gemäß einer Ausführungsform;
- Fig. 5: ist eine schematische Darstellung eines detaillierten Querschnitts der Fig. 4, die Stufungsprofile im Teiledesign veranschaulicht, gemäß einer Ausführungsform;
- Fig. 6: ist eine schematische Darstellung eines Querschnitts der Fig. 1 gemäß einer Ausführungsform;
- Fig. 7: ist eine schematische Darstellung einer Draufsicht auf ein Spannsystem gemäß einer Ausführungsform;
- Fig. 8: ist eine schematische Darstellung einer isometrischen Explosionsansicht eines Spannsystems gemäß einer Ausführungsform;
- Fig. 9: ist eine schematische Darstellung eines Querschnitts von Fig. 7 gemäß einer Ausführungsform;
- Fig. 10: ist eine schematische Darstellung einer isometrischen Ansicht eines Spannsystems gemäß einer Ausführungsform;
- Fig. 11: ist eine schematische Darstellung einer feinen Endform, die eine Explosionsansicht gemäß einer Ausführungsform bildet;
- Fig. 12: ist eine schematische Darstellung eines Querschnitts von Figur 11 gemäß einer Ausführungsform; und
- Fig.: 13zeigt beispielhafte "einer maschinellen Bearbeitung ähnelnde" Merkmale.

### AUSFÜHRLICHE BESCHREIBUNG

Die vorliegenden Ausführungsformen bieten Verfahren und Systeme für die Herstellung komplexer Teile aus mehreren Endformteilen während des und vor dem Umformen. Die Ausführungsformen der Verfahren und Systeme können in mehreren Schritten geschaffen werden. Diese Schritte können in drei Gruppen unterteilt werden:
(i) spezifisches Legen ("Lay-Up");
(ii) Maßschneidern oder Trimmen von nicht konsolidierten Teilen zu einer Endform; und
(iii) Spannmaßnahmen.

Die vorliegenden Ausführungsformen können zu einer Verringerung der Verarbeitungsschritte führen und ein Formen komplexer Gebilde relativ schnell ermöglichen.

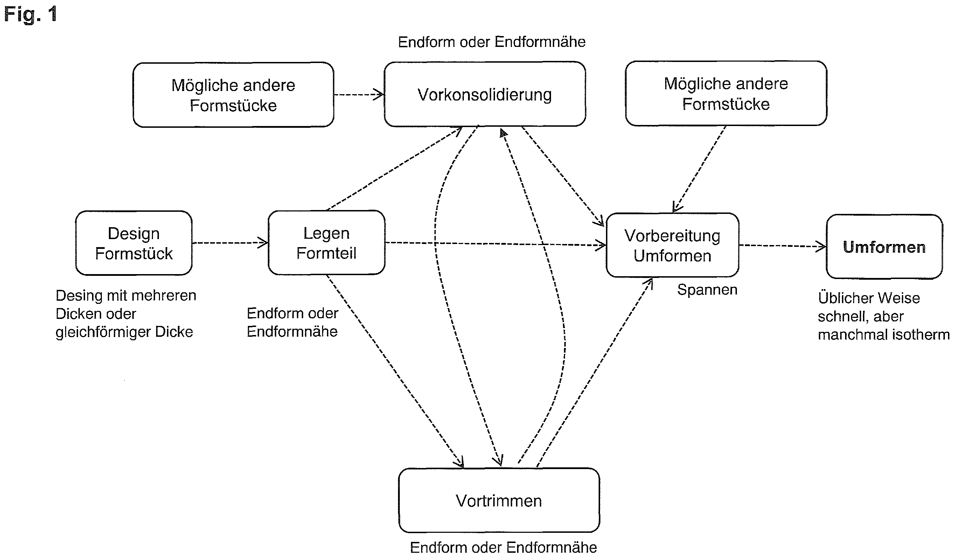

Ausführungsformen formen ein ungleichmäßig oder gleichmäßig dickes Teil in eine gewünschte Form, indem die Auslegung und Verarbeitung des rohen Formteils angepasst wird. Die Figur 1 veranschaulicht das gesamte Verfahren für die Verbindung mehrerer Endformteile vor dem oder während des Umformens.

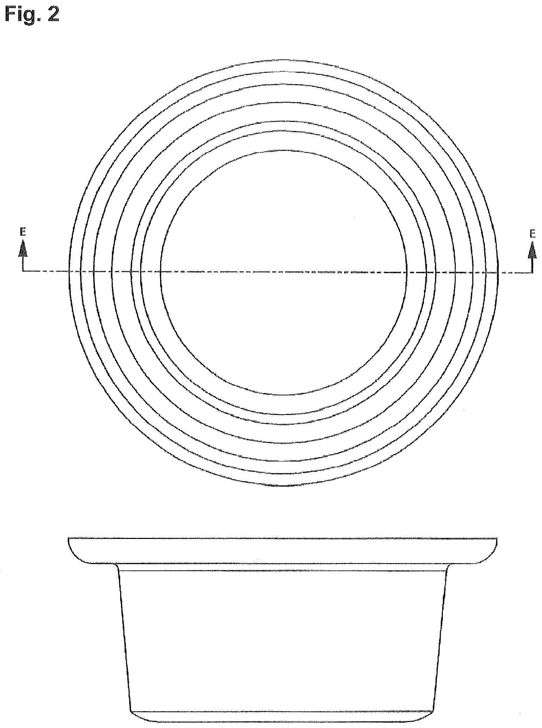

Wie in Figur 1 gezeigt, gemäß einer Ausführungsform, ist der erste Schritt die Erstellung der maßgeschneiderten rohen Formteile oder der nicht konsolidierten LFRT-Formteile aus mehreren Lagen von unidirektionalen Bändern in spezifischem Legeaufbau. Dies gelingt am besten mit einem Verständnis dafür, wie sich die Dicke von Endlosfaser-Thermoplastteilen während des Umformens zu komplexen Formen verändert. Stufungsprofile, Abweichungen bei der Dichte oder ungleichmäßig dicke konsolidierte Teile können ein gleichmäßig dickes Teil, wie in Figur 2 gezeigt, bilden.

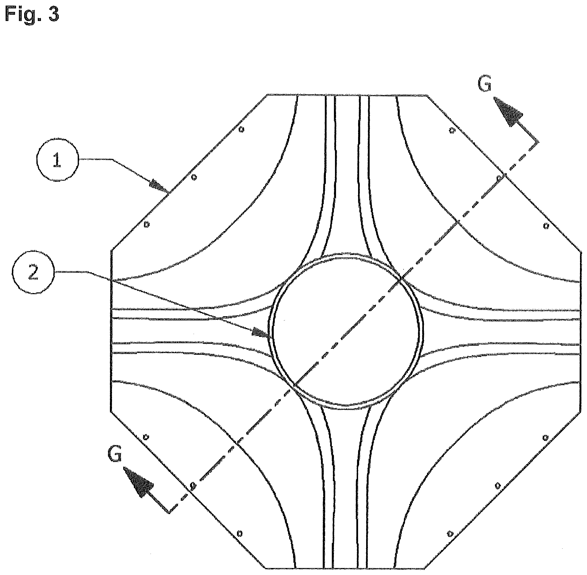

Das Teil kann in Endform oder endformnaher Form gelegt werden in Vorbereitung für die Konsolidierung; ein entsprechendes Beispiel ist das Formteil 2 in Figur 3, welche schematisch ein Beispiel eines mehrfachdicken rohen Formteils zeigt, das Stufungsprofile ("ply-drop profiles") aufweist, wobei die Formteile 1 und 2 in Figur 3 als zwei einzelne Teile dargestellt sind, die jedoch während der Konsolidierung der Formteile 1 und 2 fusionsgebondet werden. Das Formteil 2, in Endform vorliegend, und das endformnahe Formteil 1 sind beide für eine gewünschte Form maßgeschneidert und können manchmal von einem maßgeschneiderten endformnahen Teil auf ein Endformteil getrimmt werden; was den zweiten Schritt darstellt. Für dicke Teile mit komplexer Geometrie muss das Formteil 1 nicht unbedingt ein Endformteil sein, weil es während des Formens möglicherweise einzigartige Spannsysteme erfordert. Diese Spannsysteme verbessern die Endformteilqualität, indem die Rückschläge bei der Materialeigenschaft aufgrund von Teilefehlern, wie zum Beispiel Unebenheiten oder Bündelung von Material, reduziert werden. Hierauf wird im Folgenden noch weiter eingegangen.

Beim Konsolidieren können die Formteile 1 und 2 in einem mit Taschen beziehungsweise Aussparungen versehenen Metallwerkzeug verbunden werden. Die Konsolidierung steuert die Temperatur der Teile und des Werkzeugs unter Druck.

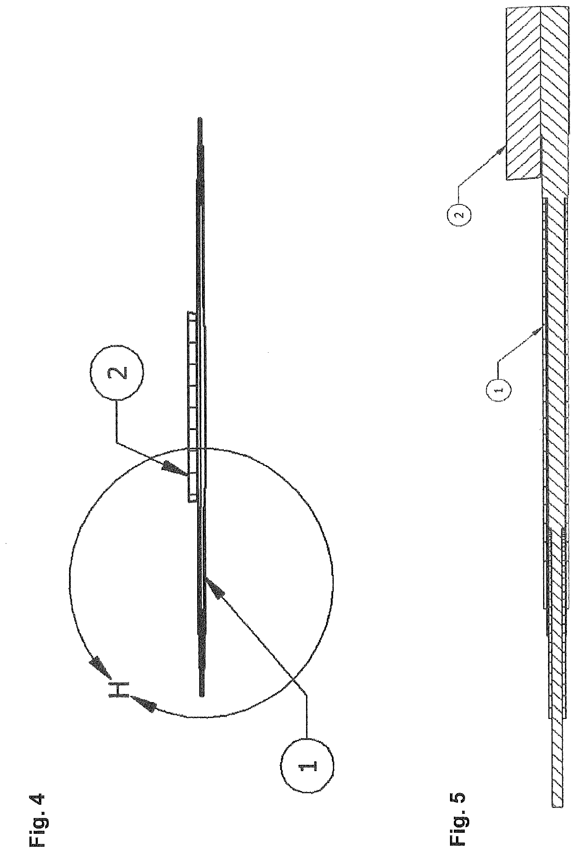

Das Konsolidieren kann ein zum Umformen bereites Endformteil herstellen, eine Kombination aus einem auf einem Endformteil fusionsgebondetes halbfertiges Endformteil, oder eine beliebige Kombination aus Endformteilen, halbfertigen Endformteilen Teilen und endformnahen Teilen. Die Figur 4 zeigt das Formteil 2 als ein Endformteil auf einem Formteil 1, als ein halbfertiges Endformteil, bereit zum Umformen.

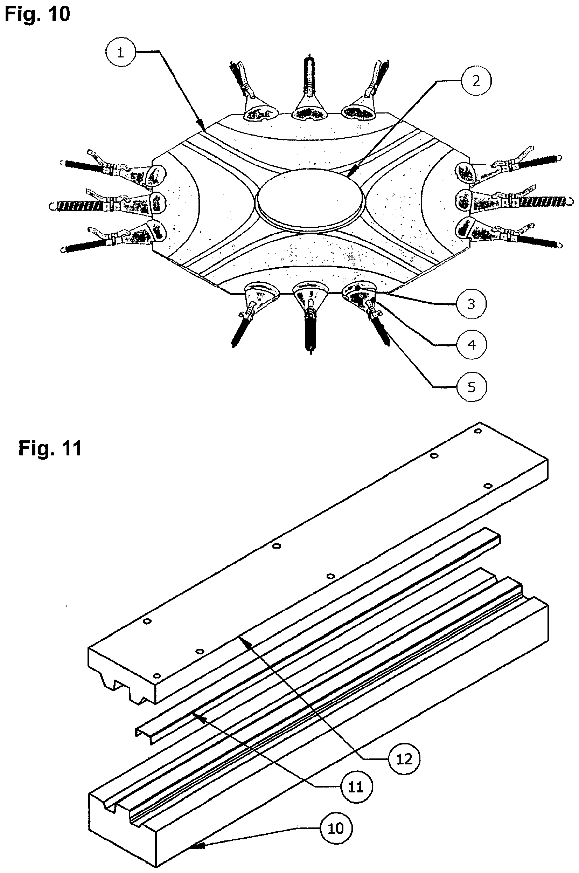

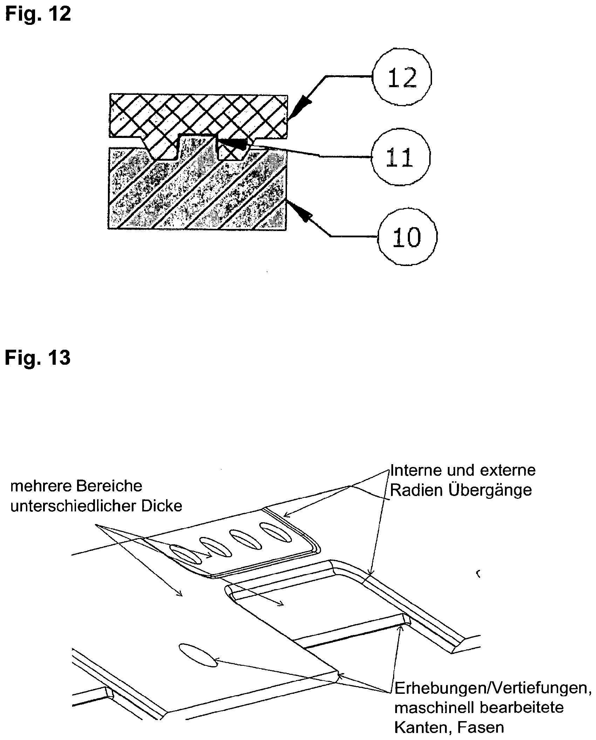

Das Formen eines dünnwandigen Endformteils ohne Spannung ist in der Figur 11 und der Figur 12 dargestellt. Figur 11 zeigt in einer Explosionsansicht eine untere Form 10 und eine zur unteren Form 10 korrespondierende obere Form 12, zwischen welchen ein Formteil 11 eingebracht ist. In Figur 12 ist dargestellt, wie durch die untere Form 10 und die obere Form 12 das Formteil 11 in die gewünschte Endform gebracht wird.

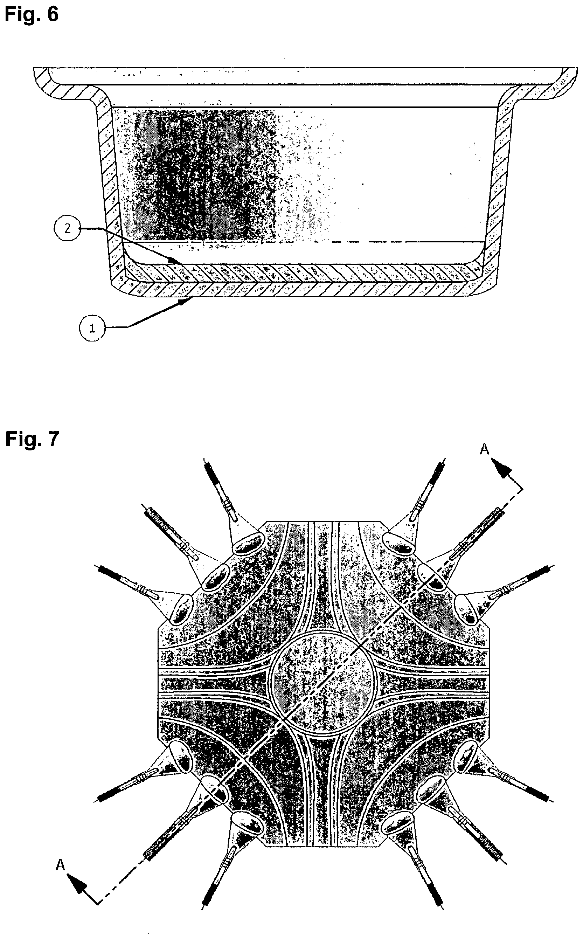

Das Umformen erfolgt am besten, wenn das Formteil 2 oder das Endformteil sich auf der inneren Formlinie des Teils befinden und von dem Formteil 1 eingeschlossen wird, wie in der Figur 6 gezeigt.

Eine andere Ausführungsform formt Endformteile auf Endformteile während des Stanzverfahrens, indem ein Endformteil in die Form gelegt wird und ein geschmolzenes Teil darauf geformt wird. Das geschmolzene Teil sollte möglichst heiß sein, um eine Fusionsverbindung zum verfestigten Teil zu schaffen.

Der Vorbereitungsschritt zur Umformung bereitet das Teil für das Stanz-Thermoformen vor wie in den Figuren 7 bis 10 dargestellt. Der dritte Schritt umfasst die Spannmaßnahmen oder die für das Spannen eingesetzten Vorrichtungen. Diese können spezifisch beziehungsweise individuell sein, abhängig von der Formkomplexität, Dicke und Ziehtiefe. Aufgabe der Spannmaßnahmen ist es, die Form der Formteile zu kontrollieren, wenn das Teil in die Form gezogen wird und in der Form erstarrt. Die Spannmaßnahmen induzieren eine kontrollierte und vorhersagbare Materialbewegung, indem die Ziehgeschwindigkeit in den unterschiedlichen Teilbereichen verringert wird.

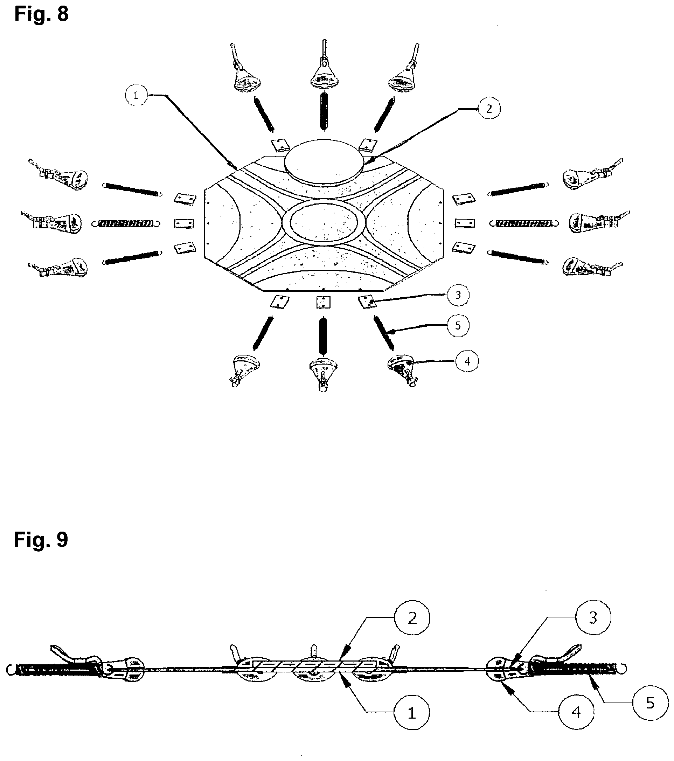

Spannung kann auf verschiedenste Arten und Weisen ausgeübt werden, aber es ist eine Herausforderung, das Haftvermögen auf geschmolzenen Teilen aufrechtzuerhalten. Dies erreicht man am besten unter Verwendung von Hitzeschilden aus Aluminium, wie in den Figuren 8 bis 10 gezeigt, wobei die Bezugszeichen 3, 4 und 5 jeweils die Klammer, den Hitzeschild und die Feder bezeichnen. Der Hitzeschild 4 schützt das Formteil vor der Hitze und verhindert so, dass es schmilzt. Dadurch wird ein Herausziehen der Feder 5 und der Klammer 3 verhindert. Dies kann auch durch Kaltluftzufuhr zum Hitzeschild befördert werden, wenn aufgrund der Teildicke und der Notwendigkeit für eine gleichmäßige Teile-Temperatur lange Verweilzeiten bzw. Einwirkzeiten erforderlich sind.

Sobald die Umformvorbereitung abgeschlossen und die Spannmaßnahmen auf das Teil angewandt worden sind, ist das Teil bereit für das individuelle Stanz-Thermoformen. Die Herstellung des Teils erfolgt gemäß dem Verfahren der vorliegenden Ausführungsformen und kann in verschiedensten Formen, Größen, Dicken und Ausführungen erfolgen.

Insgesamt können die vorliegenden Ausführungsformen Herstellungsverfahren bereitstellen, die eine relativ rasche Produktion komplexer, aus LFTP bestehender Geometrien ermöglichen. Dadurch ist die Produktion von Teilen möglich ohne auf Produktionsleistung und strukturelle Integrität verzichten zu müssen. Insbesondere können die vorliegenden Ausführungsformen Herstellungsverfahren bereitstellen, die es ermöglichen, Teile herzustellen, welche Merkmale aufweisen, die denen einer maschinellen Bearbeitung ähneln (Erhebungen oder Vertiefungen, lokalisierte Änderungen der Dicke, Radien an Kanten der Erhebungen oder Vertiefungen), wie beispielhaft in Figur 13 gezeigt.

Während im Vorstehenden Ausführungsformen beschrieben wurden, in denen ein Umformen durch Stanz-Thermoformen erfolgt, so ist dies nicht beschränkend und die vorliegende Erfindung kann sich zur Herstellung von Teilen anwenden lassen, bei der lediglich ein Formen beispielsweise durch Thermoformen notwendig ist.

Die vorliegenden Ausführungsformen können auch Herstellungsverfahren bereitstellen, die es ermöglichen, Schritte wie Verbinden und Trimmen für die Produktion komplexer Konturen und Formen zu eliminieren.

Die vorliegenden Ausführungsformen können auch Herstellungsverfahren bereitstellen, die hervorragende und wiederholbare Ergebnisse mit minimalem menschlichem Fehlverhalten erlauben.

Die vorliegenden Ausführungsformen können auch Herstellungsverfahren zum Formen komplexer Gebilde bereitstellen, in denen minimale oder keine Unebenheiten, Faltenbildung oder gruppierte gefaltete Bereiche bestehen. Wenn einige Unebenheiten, Faltenbildung oder gruppierte gefaltete Bereiche vorhanden sind, können die vorliegenden Ausführungsformen die Vorhersage, Steuerung und Einschränkung von Unebenheiten, Faltenbildung und gruppierten gefalteten Bereichen ermöglichen.

Durch die vorliegenden Ausführungsformen können möglicherweise auch die Anzahl der Herstellungsschritte und somit der verbundene Ausrüstungsverschleiß verringert werden.

Die obige Offenbarung der Ausführungsformen wurde zu Zwecken der Veranschaulichung und Beschreibung dargestellt. Sie soll nicht erschöpfend sein oder andere Ausführungsformen auf die vorstehend offenbarten präzisen Formen zu beschränken. Viele Abweichungen von und Abänderungen der in diesem Dokument beschriebenen Ausführungsformen werden für einen Fachmann angesichts der obigen Offenlegung offensichtlich sein. Der Geltungsbereich der Ausführungsformen wird allein durch die Ansprüche bestimmt.

## Patentansprüche

1. Verfahren für die Herstellung komplexer geometrischer Strukturen aus mehreren Formteilen (1, 2), aufweisend die Schritte:
Legen der Formteile (1, 2), wobei zumindest ein Formteil (1, 2) aus mehreren Lagen unidirektionaler Bänder aus langfaserverstärktem Thermoplasten erstellt wird;
Vorbereiten der Formteile (1, 2) für ein Formen;
wobei vor dem Vorbereiten der Formteile (1, 2) für ein Formen zumindest eines der Formteile (1, 2) auf eine Endform oder endformnah getrimmt oder maßgeschneidert wird,
wobei vor dem Vorbereiten der Formteile (1, 2) für ein Formen zumindest das eine Formteil (1, 2) aus langfaserverstärktem Thermoplasten einer Konsolidierung unterworfen wird; und
Formen der vorbereiteten Formteile (1, 2).

2. Verfahren nach Anspruch 1, wobei
zumindest ein erstes Formteil (1) einer Konsolidierung unterworfen wird und auf eine Endform oder endformnah getrimmt oder maßgeschneidert wird, zumindest ein zweites Formteil (2) bereitgestellt wird als ein nicht konsolidiertes Formteil, und
das zumindest ein erstes, konsolidiertes und getrimmtes oder maßgeschneidertes Formteil (1) mit zumindest einem zweiten, nicht konsolidierten Formteil (2) ko-konsolidiert wird.

3. Verfahren nach einem der vorstehenden Ansprüche, wobei das Formen der vorbereiteten Formteile (1, 2) durch Thermoformen erfolgt.

4. Verfahren nach Anspruch 2, wobei das Thermoformen ein Umformen, insbesondere durch Stanz-Thermoformen, ist.

5. Verfahren nach einem der vorstehenden Ansprüche, wobei das Vorbereiten der Formteile (1, 2) für das Formen ein Anwenden von Spannmaßnahmen umfasst.

6. Verfahren nach Anspruch 5, wobei das Anwenden von Spannmaßnahmen das Anbringen einer Mehrzahl von Spanneinheiten umfasst, wobei jede Spanneinheit jeweils eine Klammer (3), ein Hitzeschild (4) und eine Feder (5) aufweist.

7. Verfahren nach Anspruch 6, ferner aufweisend ein Zuführen von Kaltluft zu dem Hitzeschild (4).

8. Verfahren nach einem der vorstehenden Ansprüche, wobei die Formteile (1, 2) während der Konsolidierung fusionsgebondet werden.

9. Verfahren nach einem der vorstehenden Ansprüche, wobei das Konsolidieren unter Druck stattfindet.

10. Verfahren nach einem der vorstehenden Ansprüche, wobei beim Konsolidieren die Temperatur der Formteile (1, 2) und Werkzeuge gesteuert wird.

## Claims

1. Method for producing complex geometric structures from a plurality of moulded parts (1, 2), having the steps:
lay-up of the moulded parts (1, 2), wherein at least one moulded part (1, 2) is created from a plurality of plies of unidirectional tapes made of long-fibre-reinforced thermoplastics;
preparation of the moulded parts (1, 2) for shaping;
wherein, prior to the preparation of the moulded parts (1, 2) for shaping, at least one of the moulded parts (1, 2) is trimmed or tailored to a final shape or a near-final shape,
wherein, prior to the preparation of the moulded parts (1, 2) for shaping, at least the one moulded part (1, 2) made of long-fibre-reinforced thermoplastics is subjected to consolidation; and
shaping of the prepared moulded parts (1, 2).

2. Method according to claim 1, wherein
at least one first moulded part (1) is subjected to consolidation and trimmed or tailored to a final shape or a near-final shape,
at least one second moulded part (2) is provided in the form of a non-consolidated moulded part, and
the at least one first, consolidated and trimmed or tailored moulded part (1) is co-consolidated with at least one second, non-consolidated moulded part (2).

3. Method according to either one of the preceding claims, wherein the shaping of the prepared moulded parts (1, 2) is effected by thermoforming.

4. Method according to claim 2, wherein the thermoforming is a reshaping, especially by punch-thermoforming.

5. Method according to any one of the preceding claims, wherein the preparation of the moulded parts (1, 2) for shaping comprises use of tensioning measures.

6. Method according to claim 5, wherein the use of tensioning measures comprises the application of a plurality of tensioning units, each tensioning unit having a clamp (3), a heat shield (4) and a spring (5).

7. Method according to claim 6, further having a supply of cold air to the heat shield (4).

8. Method according to any one of the preceding claims, wherein the moulded parts (1, 2) are fusion-bonded during the consolidation.

9. Method according to any one of the preceding claims, wherein the consolidation takes place under pressure.

10. Method according to any one of the preceding claims, wherein during the consolidation the temperature of the moulded parts (1, 2) and tools is controlled.

## Revendications

1. Procédé pour la fabrication de structures géométriques complexes à partir de plusieurs pièces moulées (1, 2), présentant les étapes consistant à :
placer les pièces moulées (1, 2), au moins une pièce moulée (1, 2) étant réalisée à partir de plusieurs couches de bandes unidirectionnelles en thermoplastique renforcé de fibres longues,
préparer les pièces moulées (1, 2) pour un moulage ;
dans lequel, avant de préparer les pièces moulées (1, 2) pour un moulage, au moins une des pièces moulées (1, 2) est dressée ou mise à dimension à une forme finale ou proche d'une forme finale,
dans lequel, avant de préparer les pièces moulées (1, 2) pour un moulage, au moins une pièce moulée en thermoplastique renforcé de fibres longues est soumise à une consolidation ; et
mouler les pièces moulées (1, 2) préparées.

2. Procédé selon la revendication 1, dans lequel
au moins une première pièce moulée (1) est soumise à une consolidation et dressée ou mise à dimension à une forme finale ou proche d'une forme finale,
au moins une deuxième pièce moulée (2) est mise à disposition sous la forme d'une pièce moulée non consolidée, et
ladite au moins une première pièce moulée (1) consolidée et dressée ou mise à dimension est co-consolidée avec au moins une deuxième pièce moulée (2) non consolidée.

3. Procédé selon l'une des revendications précédentes, dans lequel le moulage des pièces moulées préparées (1, 2) est effectué par thermoformage.

4. Procédé selon la revendication 2, dans lequel le thermoformage est un formage, en particulier par thermoformage et découpage.

5. Procédé selon l'une des revendications précédentes, dans lequel la préparation des pièces moulées (1, 2) pour le moulage comprend une application de mesures de serrage.

6. Procédé selon la revendication 5, dans lequel l'application de mesures de serrage comprend la mise en place d'une pluralité d'unités de serrage, chaque unité de serrage présentant une pince (3), un bouclier thermique (4) et un ressort (5).

7. Procédé selon la revendication 6, présentant en outre une amenée d'air froid au bouclier thermique (4).

8. Procédé selon l'une des revendications précédentes, dans lequel les pièces moulées (1, 2) sont liées par fusion pendant la consolidation.

9. Procédé selon l'une des revendications précédentes, dans lequel la consolidation est réalisée sous pression.

10. Procédé selon l'une des revendications précédentes, dans lequel la température des pièces moulées (1, 2) et des outils est commandée pendant la consolidation.
